# EUROPÄISCHE PATENTANMELDUNG

(11) **EP 2 455 594 A1**
(43) Veröffentlichungstag der Anmeldung: **23.05.2012**
(21) Anmeldenummer: 11187922.7
(22) Anmeldetag: 04.11.2011
(51) Int. Cl.: F02B 37/02, F02B 39/00, F01N 5/04, F01N 3/04

(54) **Abgasführungsvorrichtung für eine Verbrennungskraftmaschine**

(30) Priorität: 18.11.2010 DE 102010051562
(71) Anmelder: Pierburg GmbH, 41460 Neuss (DE)
(72) Erfinder: Kühnel, Hans-Ulrich, 41239 Mönchengladbach (DE); Hüsges, Hans-Jürgen, 47877 Willich (DE)
(74) Vertreter: Patentanwälte ter Smitten Eberlein Rütten Partnerschaftsgesellschaft

(57) **Zusammenfassung**

Es sind Abgasführungsvorrichtungen für eine Verbrennungskraftmaschine mit einem Abgaskrümmergehäuse (4) bekannt, in dem zumindest ein Abgaskanal (12), mehrere Abgaseinlässe (6, 8), welche mit Abgaskanälen eines Zylinderkopfes oder eines Kurbelgehäuses fluidisch verbunden sind sowie ein erster Abgasauslass (14) und ein zweiter Abgasauslass (36) ausgebildet sind, über den Abgas zur Verbrennungskraftmaschine rückführbar ist und einem Turbinengehäuse (20) eines Turboladers, welches einstückig mit dem Abgaskrümmergehäuse (4) hergestellt ist und dessen zumindest eine, einen Ringkanal bildende Flut (18, 22) mit dem zumindest einen Abgaskanal (12) des Abgaskrümmers (2) fluidisch verbunden ist.

Ein solches Bauteil neigt bei Herstellung aus Leichtmetall zu Spannungsrissen aufgrund thermischer Überlastung.

Es wird daher erfindungsgemäß vorgeschlagen, dass im Abgaskrümmergehäuse (4) ein Kühlmittelkanal (30) ausgebildet ist, der fluidisch mit einem Kühlmittelkanal (32) im Turbinengehäuse (20) verbunden ist.

## Beschreibung

Die Erfindung betrifft eine Abgasführungsvorrichtung für eine Verbrennungskraftmaschine mit einem Abgaskrümmergehäuse, in dem zumindest ein Abgaskanal, mehrere Abgaseinlässe, welche mit Abgaskanälen eines Zylinderkopfes oder eines Kurbelgehäuses fluidisch verbunden sind sowie ein erster Abgasauslass und ein zweiter Abgasauslass ausgebildet sind, über den Abgas zur Verbrennungskraftmaschine rückführbar ist und einem Turbinengehäuse eines Turboladers, welches einstückig mit dem Abgaskrümmergehäuse hergestellt ist und dessen zumindest einer Ringkanal mit dem zumindest einen Abgaskanal des Abgaskrümmers fluidisch verbunden ist.

Abgaskrümmer zur Aufnahme des Abgases aus den Verbrennungsräumen des Verbrennungsmotors werden zumeist aus hochtemperaturfestem Guss, wie beispielsweise Grauguss, hergestellt, da sonst die maximal zulässige thermische Belastung der Bauteile überschritten werden würde. Die bekannten Abgaskrümmer verfügen üblicherweise über ein oder zwei Abgasauslässe, je nachdem, ob der Verbrennungsmotor mit oder ohne Turbolader ausgeführt ist und ob eine Abgasrückführung direkt den Abgaskrümmer als Abzweigung verwendet oder die Abzweigung zur Abgasrückführung erst hinter dem Abgaskrümmer angeordnet wird.

Der zur Verfügung stehende Bauraum im Motorraum sinkt dabei in den letzten Jahren, insbesondere weil auch Kleinwagen mit aufgeladenen Motoren ausgestattet werden. Aus diesem Grund wurden die Gehäuse der Turbolader beziehungsweise der Turbinen des Turboladers direkt an den Abgaskrümmer geflanscht.

Um den dabei entstehenden Montageaufwand zu reduzieren, wurde in der DE 699 27 233 T2 vorgeschlagen, das Turbinengehäuse eines Turboladers einstückig mit einem Abschnitt des Abgaskrümmers herzustellen. Neben dem Abgasauslass zum Turbinengehäuse weist der Abgaskrümmer einen zweiten Flansch zum Anschluss eines Abgasrückführkanals auf, über welchen Abgas zum Einlass des Verbrennungsmotors zurückgeführt werden kann. Eine Herstellung aus Leichtmetall ist aufgrund der großen thermischen Belastungen nicht möglich.

Des Weiteren wird in der DE 10 2007 053 126 A1 eine Abgasführung offenbart, bei der im Abgaskrümmer Kühlmittelkanäle ausgebildet sind, die den Abgaskrümmer kühlen, so dass dessen thermische Belastung reduziert wird, wodurch der Abgaskrümmer als Blechteil oder Aluminiumgussteil ausgeführt werden kann. Am Abgaskrümmer ist ein Abgasrückführventil direkt angeflanscht. Eine zusätzliche Kühlung des rückgeführten Abgases findet jedoch nicht statt. Dies führt zu relativ hohen Temperaturen des rückgeführten Abgases, was wiederum erhöhte Schadstoffemissionen zur Folge hat.

Es stellt sich daher die Aufgabe, eine Abgasführungsvorrichtung zu schaffen, welche aus Leichtmetallguss hergestellt werden kann und gleichzeitig den Montageaufwand und den benötigten Bauraum im Vergleich zu bekannten Ausführungen reduziert. Des Weiteren soll eine hohe Dauerhaltbarkeit des Leichtmetallgussteils trotz der thermischen Belastungen erreicht werden.

Diese Aufgabe wird durch den kennzeichnenden Teil des Hauptanspruchs gelöst. Dadurch, dass im Abgaskrümmergehäuse ein Kühlmittelkanal ausgebildet ist, der fluidisch mit einem Kühlmittelkanal im Turbinengehäuse verbunden ist, erfolgt eine gleichmäßige Kühlung sowohl des Turbinengehäuses als auch des Abgaskrümmers, wodurch thermische Spannungen vermieden werden, so dass das Bauteil als einstückiges Leichtmetallgussteil hergestellt werden kann. Da zusätzlich eine gute Kühlung des zurückgeführten Abgases erreicht wird, sinken die Abgasemissionen. Der Bauraumbedarf und der Montageaufwand werden minimiert, da keine weiteren Anschlüsse notwendig sind.

Vorzugsweise umgibt der Kühlmittelkanal den Ringkanal des Turbinengehäuses radial. Dies führt zu einer gleichmäßigen Kühlung des Turbinengehäuses und somit wiederum zu einem weitgehend spannungsfreien Bauteil.

In einer vorteilhaften Ausgestaltung der Erfindung ist im Abgaskrümmergehäuse ein Wärmetauscher ausgebildet, dessen Durchströmung über ein Abgasrückführventil regelbar ist, welches am Abgaskrümmergehäuse angeordnet ist und dessen Kühlmittelmantel durch den Kühlmittelkanal des Abgaskrümmers gebildet ist. Somit kann innerhalb des Gehäuses des Abgaskrümmers auch die Regelung und Kühlung des zurückgeführten Abgases verwirklicht werden. Insbesondere können hohe Kühlwirkungsgrade für das zurückgeführte Abgas erzielt werden, ohne zusätzliche Bauteile verwenden und montieren zu müssen. Es wird eine besonders kompakte Einheit geschaffen, bei der keine zusätzlichen Kanäle zur Führung des Kühlmittels oder des Abgases ausgebildet werden müssen.

In einer weiterführenden Ausführung ist der erste Abgasauslass des Abgaskrümmers stromaufwärts des Wärmetauschers angeordnet und der zweite Abgasauslass des Abgaskrümmers stromabwärts des Wärmetauschers angeordnet, wodurch das Abgas wahlweise gekühlt zurückgeführt oder mit geringer Kühlung dem Turbolader zugeführt werden kann.

Vorzugsweise sind der zumindest eine Abgaskanal und der Wärmetauscher im Wesentlichen parallel zueinander angeordnet und zumindest teilweise in entgegengesetzter Richtung durchströmt. Dies dient zur Minimierung des Bauraumbedarfs und vereinfacht die Herstellung der Anordnung.

In einer besonders vorteilhaften Ausgestaltung grenzt der zumindest eine stromaufwärts des Abgasrückführventils und des Wärmetauschers angeordnete Abgaskanal im Abgaskrümmergehäuse unmittelbar an den Kühlmittelkanal an, wodurch die Wandungen des Abgaskrümmergehäuses trotz der Durchströmung des Kanals mit heißem Abgas eine Kühlung erfahren, durch welche Spannungen im Leichtmetallgussteil vermieden werden.

Vorzugsweise ist der Turbolader zweiflutig ausgebildet, wobei die erste Flut mit einem ersten Abgaskanal verbunden ist, der mit einer ersten Zylindergruppe fluidisch verbunden ist und die zweite Flut mit einem zweiten Abgaskanal verbunden ist, der mit einer zweiten Zylindergruppe fluidisch verbunden ist, wobei der erste und der zweite Abgaskanal parallel zueinander angeordnet sind und fluidisch mit einem Kanalgehäuse des Abgasrückführventils verbunden sind. Dies führt zu günstigen Strömungsverhältnissen im Abgaskrümmer und bei der Anströmung des Turboladers.

Besonders bevorzugt ist es, wenn das Abgaskrümmergehäuse und das Turbinengehäuse aus Leichtmetall sind. Auf diese Weise können große Gewichtsvorteile erzielt werden, die zu geringeren Kraftstoffverbräuchen führen.

In einer weiteren bevorzugten Ausgestaltung der Erfindung ist am Abgaskrümmergehäuse ein Kühlmittelventil vorgesehen, über welches der Kühlmittelstrom abschaltbar ist. Beim Kaltstart der Verbrennungskraftmaschine kann mittels dieses Kühlmittelventils der Kühlmittelstrom zur schnelleren Aufheizung der Verbrennungskraftmaschine unterbrochen werden, was eine Verringerung der in der Warmlaufphase entstehenden Emissionen zur Folge hat.

Es wird somit eine Abgasführungsvorrichtung geschaffen, mit der sowohl der Montage- als auch der Herstellaufwand reduziert werden können. Gleichzeitig werden thermische Spannungen im Bauteil vermieden. Durch die nunmehr mögliche Verwendung eines Leichtmetallgehäuses wird das Gewicht und somit der Kraftstoffverbrauch gesenkt, wobei dennoch gute Kühlerwirkungsgrade am zurückgeführten Abgas erzielt werden. Der benötigte Bauraum wird minimiert.

Ein Ausführungsbeispiel einer erfindungsgemäßen Abgasführungsvorrichtung ist in den Figuren dargestellt und wird nachfolgend beschrieben.

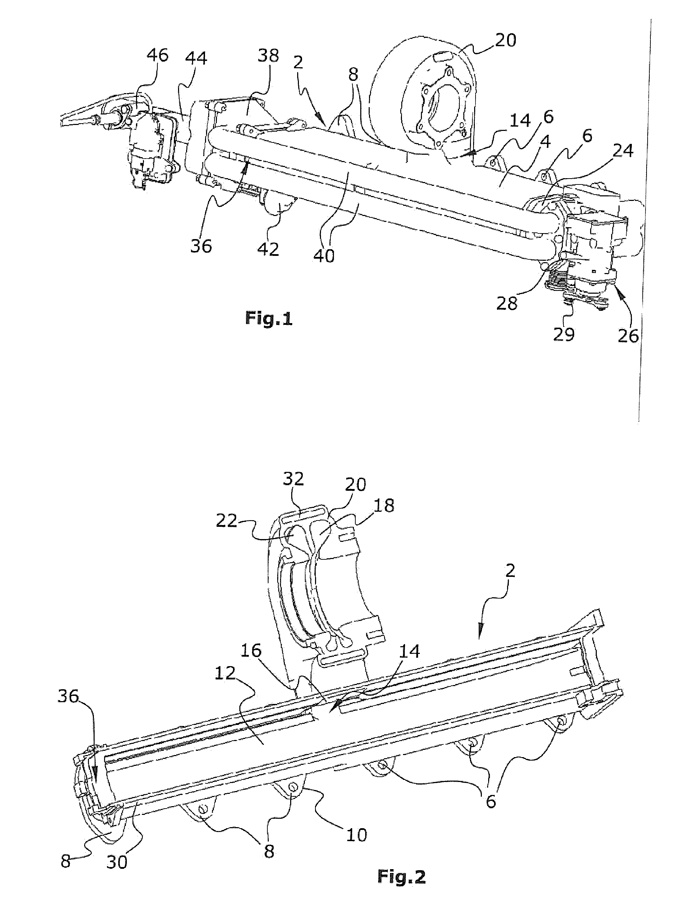

Figur 1 zeigt eine Draufsicht auf eine erfindungsgemäße Abgasführungsvorrichtung in perspektivischer Darstellung.
Figur 2 zeigt eine Schnittansicht des Gussteils der erfindungsgemäßen Abgasführungsvorrichtung der Figur 1 ohne Einbau- und Anbauteile in perspektivischer Darstellung.
Figur 3 zeigt eine zur Schnittansicht des Gussteils der erfindungsgemäßen Abgasführungsvorrichtung gemäß der Figur 2 senkrechte Schnittansicht in perspektivischer Darstellung.

Die in den Figuren dargestellte Abgasführungsvorrichtung weist einen Abgaskrümmer 2 mit einem Abgaskrümmergehäuse 4 für einen 6-Zylinder-Motor auf, an dem sechs Abgaseinlässe 6, 8 ausgebildet sind, die über Flanschflächen 10 an einem Zylinderkopf zur fluidführenden Verbindung befestigt werden können.

Die Abgaseinlässe 6, 8 teilen sich im Abgaskrümmergehäuse 4 in zwei Gruppen auf, wobei die Abgaseinlässe 6 die erste Gruppe bilden und in einen ersten Abgaskanal 12 im Abgaskrümmergehäuse 4 münden, der parallel zu einem zweiten, in den Figuren nicht erkennbaren Abgaskanal im Abgaskrümmergehäuse 4 angeordnet ist, in den die zweite Gruppe von Abgaseinlässen 8 mündet.

Am Abgaskrümmergehäuse 4 ist ein erster zweiflutiger Auslass 14 ausgebildet, dessen erste Flut 16 in Strömungsverbindung zum ersten Abgaskanal 12 des Abgaskrümmers 2 sowie zu einer ersten, einen Ringkanal bildenden Flut 18 eines Turbinengehäuses 20 steht und dessen zweite, in den Figuren nicht erkennbare Flut in Strömungsverbindung zum zweiten Abgaskanal sowie zu einer zweiten, ebenfalls einen Ringkanal bildenden Flut 22 des Turbinengehäuses 20 steht.

Die Abgaskanäle 12 sind des Weiteren fluidisch mit einem Kanalgehäuse 24 eines kombinierten Abgasrückführ- und Bypassventils 26 verbunden, welches am Abgaskrümmergehäuse 4 befestigt ist und an dem zwei Bypassrohre 40 befestigt sind, über die ein Wärmetauscher umgehbar ist. Das Abgasrückführ- und Bypassventil 26 wird mittels eines elektrischen Aktuators 28 über ein Hebelgestänge 29 betätigt, so dass durch Drehung des Aktuators 28 der freie Durchströmungsquerschnitt in Richtung des im Abgaskrümmergehäuse 4 ausgebildeten nicht dargestellten Wärmetauschergehäuses oder in Richtung der Bypassrohre 40 geregelt wird. Bei geöffnetem Abgasrückführventil 26 und geschlossenem Bypassventil wird somit im Kanalgehäuse 24 das Abgas um 180° umgelenkt und strömt zurück in das Abgaskrümmergehäuse 4, das sich parallel zu den beiden Abgaskanälen 12 erstreckt und in dem das Wärmetauschergehäuse angeordnet ist. Das Wärmetauschergehäuse ist von Kühlmittel umströmt, welches zwischen dem Wärmetauschergehäuse und dem Abgaskrümmergehäuse 4 strömt, so dass dieser Teil des Gehäuses 4 mit dem Wärmetauschergehäuse einen Wärmetauscher bildet, dessen innere, Abgas durchströmten Kanäle von einem äußeren Kühlmittelkanal 30, der als Kühlmittelmantel das Wärmetauschergehäuse umgibt, durch das Wärmetauschergehäuse getrennt ist.

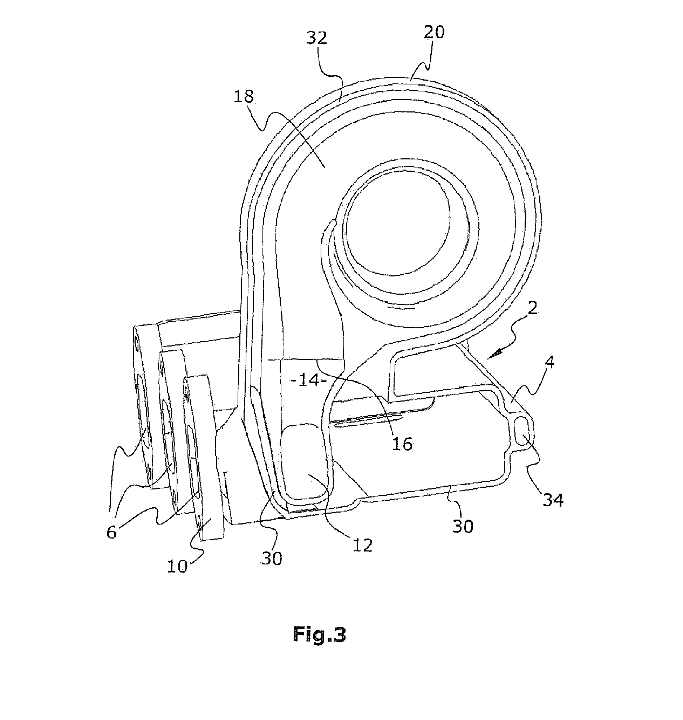

Der Kühlmittelmantel erstreckt sich, wie insbesondere in Figur 3 zu erkennen ist, in der ebenfalls das Wärmetauschergehäuse nicht dargestellt ist, auch zumindest teilweise um die Abgaskanäle 12 herum, so dass diese ebenfalls durch das Kühlmittel gekühlt werden. Des Weiteren besteht eine fluidische Verbindung dieses Kühlmittelkanals 30 zu einem ringförmigen Kühlmittelkanal 32 im Turbinengehäuse 20, welcher radial die Fluten 18, 22 des Turbinengehäuses 20 umgibt. Dies ermöglicht die einteilige Ausbildung des Abgaskrümmers 2 mit dem Turbinengehäuse 20 aus Leichtmetallguss.

Zusätzlich erstreckt sich der Kühlmittelkanal 30 über eine Verbindungsöffnung in einen im äußeren Bereich des Abgaskrümmergehäuses 4, angeordneten Kühlmittelkanal 34, über den das Kanalgehäuse 24 des Abgasrückführventils 30 mit Kühlmittel versorgt wird, so dass auch dieses vor Überhitzung geschützt wird.

Stromabwärts des Wärmetauschers befindet sich ein zweiter Abgasauslass 36 des Abgaskrümmergehäuses 4, an dem ein Anschlussgehäuse 38 eines Nachkühlers befestigt ist, in welches sich ebenfalls der Kühlmittelkanal 30 des Abgaskrümmers 2 erstreckt. Des Weiteren nimmt dieses Anschlussgehäuse 38 die Enden der zwei Bypassrohre 40 auf, deren gegenüberliegende Enden am Kanalgehäuse 24 des Abgasrückführventils 26 befestigt sind und über die der Wärmetauscher im Abgaskrümmergehäuse 4 umgehbar ist.

Zur Regelung des Kühlmittelstroms ist im Anschlussgehäuse 38 ein Kühlmittelventil angeordnet, welches über eine pneumatischen Steller 42 betätigbar ist, der während der Warmlaufphase des Verbrennungsmotors den Kühlmittelstrom im Abgaskrümmer unterbricht, um durch eine Verkürzung der Warmlaufphase, die Schadstoffemissionen zu verringern.

Am Anschlussgehäuse 38 ist ein Rohrgehäuse 44 befestigt, über welches eine Verbindung mit dem Saugrohr der Verbrennungskraftmaschine zur Rückführung des Abgases herstellbar ist. Im vorliegenden Ausführungsbeispiel ist an diesem Rohrgehäuse 44 ein Abgasmassenstromsensor 46 zur Bestimmung des rückgeführten Abgasstromes angeordnet. Des Weiteren sind innerhalb des Rohrgehäuses 44 nicht dargestellte Rückschlagventile angeordnet.

Je nach Stellung des Abgasrückführventils 26, sowie des Bypassventils wird somit der in den Abgaskrümmer 2 strömende Abgasstrom in entsprechenden Anteilen über die Abgaskanäle 12 zum ersten Abgasauslass 14 und von hier in das Turbinengehäuse 20 des Turboladers oder über das Abgasrückführventil 26 und den Wärmetauscher oder die Bypassrohre zum zweiten Abgasauslass 36 und von hier aus zum Saugrohr geleitet.

Das beschriebene Ausführungsbeispiel ist als Baueinheit einfach zu montieren und ermöglicht eine bauraumreduzierende Anordnung des Turbinengehäuses einstückig mit dem Abgaskrümmergehäuse, wodurch Leitungen entfallen. Die Durchströmung des Abgaskrümmers und des Turbinengehäuses mit dem Kühlmittel führt zu einer effektiven Kühlung des Abgaskrümmers und des Turbinengehäuses, so dass dieses aufgrund der guten Wärmeleitfähigkeit aus Leichtmetall hergestellt werden kann. Des Weiteren ist ein hoher Kühlerwirkungsgrad durch die Anordnung des Wärmetauschers im Gehäuse des Abgaskrümmers bei der Abgasrückführung erreichbar. Neben dem deutlich reduzierten Montageaufwand entsteht eine Kühlung des Gehäuses, durch welche thermische Überlastungen zuverlässig verhindert werden.

Es sollte deutlich sein, dass der Schutzbereich der Ansprüche nicht auf das beschriebene Ausführungsbeispiel begrenzt ist, sondern verschiedene konstruktive Änderungen, insbesondere bezüglich der Anordnung der Kühlmittel und Abgas führenden Kanäle zueinander denkbar sind. Insbesondere kann ein zusätzliches Bypassventil zur genauen Regelung der Aufteilung des Abgasstroms zum Kühler und zum Bypass vorgesehen werden.

## Patentansprüche

1. Abgasführungsvorrichtung für eine Verbrennungskraftmaschine mit einem Abgaskrümmergehäuse (4), in dem zumindest ein Abgaskanal (12), mehrere Abgaseinlässe (6, 8), welche mit Abgaskanälen eines Zylinderkopfes oder eines Kurbelgehäuses fluidisch verbunden sind sowie ein erster Abgasauslass (14) und ein zweiter Abgasauslass (36) ausgebildet sind, über den Abgas zur Verbrennungskraftmaschine rückführbar ist und
einem Turbinengehäuse (20) eines Turboladers, welches einstückig mit dem Abgaskrümmergehäuse (4) hergestellt ist und dessen zumindest eine, einen Ringkanal bildende Flut (18, 22) mit dem zumindest einen Abgaskanal (12) des Abgaskrümmers (2) fluidisch verbunden ist,
**dadurch gekennzeichnet, dass**
im Abgaskrümmergehäuse (4) ein Kühlmittelkanal (30) ausgebildet ist, der fluidisch mit einem Kühlmittelkanal (32) im Turbinengehäuse (20) verbunden ist.

2. Abgasführungsvorrichtung für eine Verbrennungskraftmaschine nach Anspruch 1,
**dadurch gekennzeichnet, dass**
der Kühlmittelkanal (32) den Ringkanal des Turbinengehäuses (20) radial umgibt.

3. Abgasführungsvorrichtung für eine Verbrennungskraftmaschine nach einem der Ansprüche 1 oder 2,
**dadurch gekennzeichnet, dass**
im Abgaskrümmergehäuse (4) ein Wärmetauscher ausgebildet ist, dessen Durchströmung über ein Abgasrückführventil (26) regelbar ist, welches am Abgaskrümmergehäuse (4) angeordnet ist und dessen Kühlmittelmantel durch den Kühlmittelkanal (30) des Abgaskrümmers (2) gebildet ist.

4. Abgasführungsvorrichtung für eine Verbrennungskraftmaschine nach Anspruch 3,
**dadurch gekennzeichnet, dass**
der erste Abgasauslass (14) des Abgaskrümmers (2) stromaufwärts des Wärmetauschers angeordnet ist und der zweite Abgasauslass (36) des Abgaskrümmers (2) stromabwärts des Wärmetauschers angeordnet ist.

5. Abgasführungsvorrichtung für eine Verbrennungskraftmaschine nach einem der Ansprüche 3 oder 4,
**dadurch gekennzeichnet, dass**
der zumindest eine Abgaskanal (12) und der Wärmetauscher im Wesentlichen parallel zueinander angeordnet und zumindest teilweise in entgegengesetzter Richtung durchströmt sind.

6. Abgasführungsvorrichtung für eine Verbrennungskraftmaschine nach einem der Ansprüche 3 oder 5,
**dadurch gekennzeichnet, dass**
der zumindest eine stromaufwärts des Abgasrückführventils (26) und des Wärmetauschers angeordnete Abgaskanal (12) im Abgaskrümmergehäuse (4) unmittelbar an den Kühlmittelkanal (30) angrenzt.

7. Abgasführungsvorrichtung für eine Verbrennungskraftmaschine nach einem der vorhergehenden Ansprüche,
**dadurch gekennzeichnet, dass**
der Turbolader zweiflutig ausgebildet ist, wobei die erste Flut (18) mit dem ersten Abgaskanal (12) verbunden ist, der mit einer ersten Zylindergruppe fluidisch verbunden ist und die zweite Flut (22) mit einem zweiten Abgaskanal verbunden ist, der mit einer zweiten Zylindergruppe fluidisch verbunden ist.

8. Abgasführungsvorrichtung für eine Verbrennungskraftmaschine nach Anspruch 7,
**dadurch gekennzeichnet, dass**
der erste und der zweite Abgaskanal (12) parallel zueinander angeordnet sind und fluidisch mit einem Kanalgehäuse (24) des Abgasrückführventils (26) verbunden sind.

9. Abgasführungsvorrichtung für eine Verbrennungskraftmaschine nach einem der vorhergehenden Ansprüche,
**dadurch gekennzeichnet, dass**
das Abgaskrümmergehäuse (4) und das Turbinengehäuse (20) aus Leichtmetall sind.

10. Abgasführungsvorrichtung für eine Verbrennungskraftmaschine nach einem der vorhergehenden Ansprüche,
**dadurch gekennzeichnet, dass**
am Abgaskrümmergehäuse (4) ein Kühlmittelventil vorgesehen ist, über welches der Kühlmittelstrom abschaltbar ist.
